(19) Europäisches Patentamt
European Patent Office
Office européen des brevets

(11) **EP 4 285 736 A1**

(12) **EUROPEAN PATENT APPLICATION**
published in accordance with Art. 153(4) EPC

(43) Date of publication:
06.12.2023 Bulletin 2023/49

(21) Application number: 22745742.1

(22) Date of filing: 21.01.2022

(51) International Patent Classification (IPC):
*A23L 2/00* (2006.01)          *A23L 2/38* (2021.01)
*A23L 2/56* (2006.01)

(52) Cooperative Patent Classification (CPC):
A23L 2/00; A23L 2/38; A23L 2/56

(86) International application number:
PCT/JP2022/002159

(87) International publication number:
WO 2022/163521 (04.08.2022 Gazette 2022/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.01.2021 JP 2021012326

(71) Applicant: Asahi Group Holdings, Ltd.
Tokyo 130-8602 (JP)

(72) Inventors:
• NAKAYAMA, Wataru
Moriya-shi, Ibaraki 302-0106 (JP)
• MATSUSHIMA, Takemasa
Moriya-shi, Ibaraki 302-0106 (JP)
• NAKAKAWAJI, Shingo
Moriya-shi, Ibaraki 302-0106 (JP)

(74) Representative: Müller-Boré & Partner
Patentanwälte PartG mbB
Friedenheimer Brücke 21
80639 München (DE)

(54) **LOW ALCOHOL BEER-TASTE BEVERAGE**

(57) An object of the invention is to provide a low-alcohol beer-taste beverage having an excellent beer-like flavor at the top, and an enhanced complex taste derived from brewing. The means for solving the problem is a non-alcoholic beer-taste beverage containing an aroma composition containing 0.0475 ppb or more of myrcene, 0.000475 ppb or more of $\beta$-ionone, 5.8125 ppb or more of linalool, 0.7025 ppb or more of citronellol, 0.115 ppb or more of geraniol, and 0.09 ppb or more of $\alpha$-eudesmol.

EP 4 285 736 A1

**Description**

CROSS-REFERENCE TO RELATED APPLICATION

This application claims the benefit under Article 4 of the Paris Convention based on Japanese Patent Application No. 2021-12326 filed on January 28, 2021 incorporated herein by reference in its entirely.

TECHNICAL FIELD

The present invention relates to a low-alcohol beer-taste beverage. "Low-alcohol beer-taste beverage" means a beer-taste beverage with an alcohol content of less than 1% (V/V). The meaning of "low-alcohol beer-taste beverage" also includes non-alcoholic beer-taste beverages that are substantially free of alcohol. In addition, the term "alcohol" means ethanol.

BACKGROUND ART

Low-alcohol beer-taste beverages are required to exhibit the same flavor as beer, except that they are low-alcoholic.

Patent Document 1 discloses a process for enriching the aroma profile of beverages, especially beer and wine, by means of extraction, using pervaporation of aromas from the original beverage and subsequent addition of the extracted aromas to the totally or partially alcohol-removed beverage.

In the process of Patent Document 1, aroma compounds such as higher alcohols and higher esters are selectively permeated from the fermented alcoholic beverage to a hydrophobic membrane used in the pervaporation step. As a result, high concentration permeated substances of the resulting aroma compounds are added to the alcohol-removed beverage to improve the sensory quality without significantly increasing the ethanol content.

Patent Document 2 discloses a method for improving the robust feeling of drinking of a fermented malt beverage, characterized in that the contents of furaneol, linalool, and β-myrcene in the fermented malt beverage are adjusted so that the content of furaneol is 350 ppb or more, that the content of linalool is 10 ppb or more, and that the ratio of the linalool content to the β-myrcene content ([linalool content]/[β-myrcene content]) is 10 or more.

According to the method of Patent Document 2, it is possible to improve the robust feeling of drinking of the fermented malt beverage without increasing the malt use ratio. The fermented malt beverage referred to in Patent Document 2 may be an alcoholic beverage having an alcohol concentration of 1.0 v/v% or more, or a so-called non-alcoholic beverage having an alcohol concentration of less than 1.0 v/v%.

Patent Document

   [Patent Document 1] JP 2010-517559
   [Patent Document 2] JP 2018-183126

SUMMARY

Problem to be solved by the invention

Beer contains many kinds of aroma components, and it is difficult to completely reproduce the aroma composition. Therefore, low-alcohol beer-taste beverages tend to have insufficient beer-like flavors and brewing-derived complex tastes. For example, when a low-alcohol beer-taste beverage is produced by distilling and removing the alcohol content from a beer-taste beverage containing alcohol, the obtained low-alcohol beer-taste beverage often has an unpleasant aromas such as fermented soybeans (i.e., "natto" in Japanese language) odor, drool odor, burnt odor, and potato odor. These unpleasant odors are felt immediately after the beverage is put into the mouth, and have a great adverse effect on the palatability of the beverage.

The condition of the beverage immediately after it is put into the mouth of the drinker is generally expressed as "top". For example, the aroma of a beverage that is felt immediately after the beverage is put into the mouth is called "top aroma". The top aroma of the beer-taste beverage contains aromas of components, such as alcohol, having a large content, and excellent volatility.

It is considered the reason why low-alcohol beer-taste beverages obtained by distilling and removing the alcohol content from beer-taste beverages have unpleasant aromas such as fermented soybeans odor, drool odor, burnt odor, and potato odor at the top is that since the aromas derived from alcohol are removed, aromas of low-volatile aroma components are emphasized, as a result of which the flavor balance originally possessed by beer is lost.

Patent Document 1 does not disclose that a highly volatile aroma component is permeated from beer, and even if high-concentration permeated substances of the aroma compound of Patent Document 1 is added to a low-alcohol beer-taste beverage, the effect of improving the flavor balance of the low-alcohol beer-taste beverage is insufficient. Further, the highly volatile aroma components of beer are not limited to furaneol, linalool, and β-myrcene, and in the method of Patent Document 2 characterized by adjusting these contents, the effect of improving the flavor balance of the low-alcohol beer-taste beverage is insufficient.

The present invention solves the above-mentioned problems, and an object of the present invention is to provide a low-alcohol beer-taste beverage having an excellent beer-like flavor at the top, and an enhanced complex taste derived from brewing.

Solutions to the Problems

The present invention provides a non-alcoholic beer-taste beverage containing an aroma composition containing:

0.0475 ppb or more of myrcene,
0.000475 ppb or more of β-ionone,
5.8125 ppb or more of linalool,
0.7025ppb or more citronellol,
0.115 ppb or more of geraniol, and
0.09 ppb or more of α-eudesmall.

In one embodiment, the aroma composition contains 0.0475 to 1.0 ppb of myrcene, 0.000475 to 0.010 ppb of β-ionone, 5.8125 to 71.33 ppb of linalool, 0.7025 to 10.0 ppb of citronellol, 0.115 to 1.4 ppb of geraniol, and 0.090 to 1.1 ppb of α-eudesmol.

In one embodiment, aroma components of the aroma composition are derived from a wort fermented liquid.

In one embodiment, the wort fermented liquid is a wort bottom fermented liquid.

In one embodiment, the wort fermented liquid has a malt usage ratio of 50% or more.

In one embodiment, the non-alcoholic beer tasste beverage contains an alcohol-removed wort fermented liquid.

Also, the present invention provides a method for producing a non-alcoholic beer-taste beverage, comprising:

a step of adjusting the carbon dioxide gas pressure of a wort fermented liquid from 0.05 to 0.25 MPa;
a step of vaporizing carbon dioxide gas and aroma components from the wort fermented liquid by spraying the wort fermented liquid under reduced pressure;
a step of condensing the vaporized aroma components to obtain an aroma composition;
a step of adding the obtained aroma composition to a non-alcoholic beer-taste beverage.

Also, the present invention provides a method for enhancing a beer-like flavor and a complex taste derived from brewing of a non-alcoholic beer-taste beverage, comprising:

a step of adjusting the carbon dioxide gas pressure of a wort fermented liquid from 0.05 to 0.25 MPa;
a step of vaporizing carbon dioxide gas and aroma components from the wort fermented liquid by spraying the wort fermented liquid under reduced pressure; and
a step of condensing the vaporized aroma components to obtain an aroma composition;
a step of adding the obtained aroma composition to a non-alcoholic beer-taste beverage.

In one embodiment, the non-alcoholic beer-taste beverage to which the aroma composition is added is obtained by subjecting the wort fermented liquid to an alcohol-removing treatment.

In one embodiment, the aroma composition contains 0.0475 ppb or more of myrcene, 0.000475 ppb or more of β-ionone, 5.8125 ppb or more of linalool, 0.7025 ppb or more of citronellol, 0.115 ppb or more of geraniol, and 0.09 ppb or more of α-eudesmol.

In one embodiment, the aroma composition contains 0.0475 to 1.0 ppb of myrcene, 0.000475 to 0.010 ppb of β-ionone, 5.8125 to 71.33 ppb of linalool, 0.7025 to 10.0 ppb of citronellol, 0.115 to 1.4 ppb of geraniol, and 0.090 to 1.1 ppb of α-eudesmol.

Effects of the Invention

According to the present invention, a low-alcohol beer-taste beverage having an excellent beer-like flavor at the top, and an enhanced complex taste derived from brewing is provided.

DETAILED DESCRIPTION

<Aroma composition>

In the present invention, the aroma composition means a composition containing myrcene, $\beta$-ionone, linalool, citronellol, geraniol, and $\alpha$-eudesmol, which are aroma components of beer, in specific amounts. The amounts of the aroma components contained in the aroma composition are expressed as the concentration in the state of being contained in the low-alcohol beer taste beverage.

The respective aroma components, each with a content of a specific amount or more, are combined, and thereby the unpleasant odor is reduced or masked, and the drinker can feel a beer-like aroma at the top. Therefore, the content of each aroma component may be adjusted within a range in which the effect of alleviating or masking the unpleasant odor is obtained, and it is not necessary to specify the upper limit thereof in order to solve the problem of the invention.

The aroma component may be artificially chemically synthesized or derived from a natural substance, for example, the one obtained as a fermentation metabolite by yeast. From the viewpoint of optimizing the content ratio of each aroma component, it is particularly preferable that the aroma component is derived from a wort fermented liquid obtained as a fermentation metabolite by yeast. When isomers (e.g., structural isomers and optical isomers) are present in the aroma component, the aroma component may be any isomer or a mixture of these isomers.

Myrcene is a monoterpene represented by the formula $C_{10}H_{16}$ and is an aroma component having an aroma. In the low-alcohol beer-taste beverage of the present invention, the concentration of myrcene is 0.0475 ppb or more, preferably 0.095 ppb or more, and more preferably 0.1425 ppb or more from the viewpoint of improving the flavor of the low-alcohol beer-taste beverage. The upper limit of the concentration of myrcene is, for example, 1.0 ppb or less, preferably 0.57 ppb or less, and more preferably 0.50 ppb or less. The upper limit and lower limit of the numerical ranges of the present specification can be optionally selected and combined.

In one embodiment, the concentration of myrcene in the low-alcohol beer-taste beverage is preferably 0.0475 to 1.0 ppb, more preferably 0.095 to 0.57 ppb, and still more preferably 0.1425 to 0.50 ppb.

$\beta$-ionone is a terpenoid represented by the formula $C_{13}H_{20}O$, and is an aroma component having a sweet fruit-like aroma. In the low-alcohol beer-taste beverage of the present invention, the concentration of $\beta$-ionone is 0.000475 ppb or more, preferably 0.00095 ppb or more, and more preferably 0.001425 ppb or more, from the viewpoint of improving the flavor of the low-alcohol beer-taste beverage. The upper limit of the concentration of $\beta$-ionone is, for example, 0.010 ppb or less, preferably 0.0058 ppb or less, and more preferably 0.0010 ppb or less.

In one embodiment, the concentration of the $\beta$-ionone in the low-alcohol beer-taste beverage is preferably 0.000475 to 0.010 ppb, more preferably 0.00095 to 0.0058 ppb, and even more preferably 0.001425 to 0.0010 ppb.

Linalool is a monoterpene alcohol represented by the formula $C_{10}H_{18}O$, which is an aroma component having a floral-like aroma. In the low-alcohol beer-taste beverage of the present invention, the concentration of linalool is 5.8125 ppb or more, preferably 11.625 ppb or more, and more preferably 17.4375 ppb or more from the viewpoint of improving the flavor of the low-alcohol beer-taste beverage. The upper limit of the concentration of linalool is, for example, 71.33 ppb or less, preferably 30.0 ppb or less, and more preferably 20.0 ppb or less.

In one embodiment, the concentration of the linalool in the low-alcohol beer-taste beverage is preferably 5.8125 to 71.33 ppb, more preferably 11.625 to 30.0 ppb, and still more preferably 17.4375 to 20.0 ppb.

Citronellol is a monoterpene alcohol represented by the formula $C_{10}H_{20}O$, and is an aroma component having a rose-like aroma. In the low-alcohol beer-taste beverage of the present invention, the concentration of citronellol is 0.7025 ppb or more, preferably 1.405 ppb or more, and more preferably 2.1075 ppb or more from the viewpoint of improving the flavor of the low-alcohol beer-taste beverage. The upper limit of the concentration of citronellol is, for example, 10.0 ppb or less, preferably 8.63 ppb or less, and more preferably 5.0 ppb or less.

In one embodiment, the concentration of the citronellol in a low-alcohol beer-taste beverage is preferably 0.7025 to 10.0 ppb, more preferably 1.405 to 8.63 ppb, still more preferably 2.1075 to 5.0 ppb.

Geraniol is a monoterpene alcohol represented by $C_{10}H_{18}O$, which is an aroma component having a rose-like aroma. In the low-alcohol beer-taste beverage of the present invention, the concentration of geraniol is 0.115 ppb or more, preferably 0.230 ppb or more, and more preferably 0.345 ppb or more from the viewpoint of improving the flavor of the low-alcohol beer-taste beverage. The upper limit of the concentration of geraniol is, for example, 1.4 ppb or less, preferably 1.0 ppb or less, and more preferably 0.50 ppb or less.

In one embodiment, the concentration of the geraniol in the low-alcohol beer-taste beverage is preferably 0.115 to 1.4 ppb, more preferably 0.230 to 1.0 ppb, and still more preferably 0.345 to 0.50 ppb.

$\alpha$-eudesmol is a sesquiterpene represented by the formula C15H26O, and is also pronounced in Japanese as $\alpha$-oidesumoru, which is an aroma component that provides a refreshing taste. In the low-alcohol beer-taste beverage of the present invention, the concentration of $\alpha$-eudesmol is 0.090 ppb or more, preferably 0.18 ppb or more, and more preferably 0.27 ppb from the viewpoint of improving the flavor of the low-alcohol beer-taste beverage. The upper limit of the concentration of $\alpha$-eudesmol is, for example, 1.1 ppb or less, preferably 1.0 ppb or less, and more preferably 0.50 ppb or less.

In one embodiment, the concentration of the $\alpha$-eudesmol in the low-alcohol beer-taste beverage is preferably 0.090 to 1.1 ppb, more preferably 0.18 to 1.0 ppb, and still more preferably 0.27 to 0..50 ppb.

<Wort fermented liquid>

Generally, a saccharide liquid obtained by enzymatically treating a raw material containing malt is called wort. The wort fermented liquid is a liquid obtained by fermenting the wort used in the production of ordinary beer. The wort fermented liquid may be a wort top fermented liquid or a wort bottom fermented liquid. The wort top fermented liquid is a wort fermented liquid obtained by inoculating wort with top-fermenting yeast and fermenting it at normal fermentation conditions, for example, 15 to 25°C for several days. The wort bottom fermented liquid is a wort fermented liquid in which wort is inoculated with bottom fermenting yeast and fermented at normal fermentation conditions, for example, at around 10°C for about one week.

<Production of wort fermented liquid>

The method for producing a wort fermented liquid will be described below.

First, crushed malt, auxiliary raw materials such as barley, and warm water are placed into a preparation tank and mixed to prepare maische. The preparation of the maische may be performed by a conventional method. For example, first, by holding at 35 to 60°C for 20 to 90 minutes, proteins derived from raw materials are decomposed into amino acids and the like, and then, a saccharifying step is conducted. At this stage, as necessary, enzyme agents, as mentioned below, such as a saccharifying enzyme and a protease, and flavor components such as spices and herbs, and the like may be added other than the main raw materials and the auxiliary raw materials.

Then, by gradually raising the temperature of the maische and holding it at a predetermined temperature for a certain period of time, starchy component is saccharified by utilizing an enzyme derived from malt or an enzyme added to the maische. The temperature and time during the saccharifying treatment may be appropriately determined in consideration of the type of enzyme used, the amount of maische, the quality of the intended wort fermented liquid, and the like, which may be carried out by holding it, for example, at 60 to 72°C for 30 to 90 minutes. After the saccharifying treatment, the maische is held at 76 to 78°C for about 10 minutes, and then filtered in a wort filtration tank to obtain a transparent saccharide liquid. Further, when performing the saccharifying treatment, an appropriate amount of the enzyme agent may be added within a necessary range.

Cereals to be saccharified contain malt. The malt content in cereals to be saccharified is not particularly limited, but is 25% or more, preferably 50% or more, and more preferably 67% or more. The cereals to be saccharified may be 100% malt. The ratio (%) of malt to all raw materials excluding water is referred to as a malt use ratio. The higher the malt content in the cereals, the stronger the malt-derived umami, richness and robust feeling of drinking of the obtained wort.

Auxiliary raw materials mean raw materials other than malt and hops. Examples of the auxiliary raw materials are starchy raw materials such as barley, wheat, corn starch, corn grits, rice, and Kaoliang, and saccharide raw materials such as liquid sugar and sugar. Here, the liquid sugar is produced by decomposing and saccharifying starchy component with an acid or a saccharifying enzyme, and mainly contains glucose, maltose, maltotriose and the like. In addition, spices, herbs, fruits and the like used for the purpose of imparting or improving flavor are also included in the auxiliary raw materials.

The saccharifying enzyme means an enzyme for decomposing starchy component into saccharide. As the saccharifying enzyme, there are, for example, $\alpha$-amylase, glucoamylase, pullanase and the like.

Wort boiling operation may be carried out according to the method and conditions which are commonly carried out when producing beer. For example, a saccharide liquid, the pH of which has been adjusted, is transferred to a boiling kettle, and boiled. During the time from the start of boiling of the saccharide liquid until being left to stand, hops are added in the whirlpool. Hop extract or a component extracted from hops may be used as the hops. The saccharide liquid is then transferred to a precipitation tank called a whirlpool. After hop lees and curdled protein, produced by boiling are removed, the resulting liquid is cooled to an appropriate fermentation temperature by a plate cooler. Wort is obtained by the above wort boiling operation.

The obtained wort is fermented by yeast. Fermentation of wort may be carried out according to a conventional method. For example, beer yeast is inoculated into the cooled wort, and the wort is transferred to a fermentation tank to carry out alcoholic fermentation. For the type of yeast to be inoculated, both top-fermenting yeast and bottom-fermenting yeast may be used, but it is preferred to use bottom-fermenting yeast from the viewpoint of controlling sourness, astringency and the like.

The apparent final degree of fermentation of the wort fermented liquid is preferably 80% or more. If the apparent final degree of fermentation is less than 80%, amino nitrogen is not sufficiently reduced, and a large amount of acids may need to be added in order to sufficiently lower the pH of the wort fermented liquid. The apparent final degree of fermentation of the wort fermented liquid is preferably 80 to 110%, and more preferably 85 to 100%.

The degree of fermentation is an important index which indicates to what extent fermentation has progressed in beer after fermentation, i.e., the progress of fermentation. Further, the final degree of fermentation means the ratio of the extract that can be assimilated by beer yeast based on the raw wort extract. Here, the extract that can be assimilated by beer yeast is what is obtained by subtracting an extract contained in the produced beer (that is, an extract remaining after fermenting all the extracts that can be used by beer yeast (referred to as a final extract) from the raw wort extract. The apparent final degree of fermentation means the final degree of fermentation which is calculated by using, as the value of final extract, the apparent extract, that is, the extract concentration (% (w/w)) derived from the specific gravity of alcohol-containing beer.)

The extract means the non-volatile solid component. The term extract means the non-volatile solid component itself, the amount of the non-volatile solid component, or the concentration of the non-volatile solid component depending on the context.

The apparent final degree of fermentation Vend of a wort fermented liquid may be obtained by, for example, the following formula (1).

$$\text{Vend (\%)} = \{(P-End)/P\} \times 100 \qquad (1)$$

wherein P is a raw wort extract and Eend is an apparent final extract.

The raw wort extract P is the theoretical wort extract value before alcoholic fermentation, which is back calculated from the alcohol concentration and the extract value of produced beer according to Balling's formula. Specifically, it may be obtained by the method shown in Analytica-EBC (9.4) (2007). In addition, the apparent final extract Eend may be determined by collecting beer in a flask, adding a large amount of fresh pressed yeast, fermenting the mixture at 25°C while stirring until the extract value does not decrease any more (24 hours), and measuring the apparent extract value in the remaining beer.

The apparent final extract Eend may show a negative value because it is calculated from the alcohol-containing specific density of the final extract. As a result, the apparent final degree of fermentation may exceed 100%.

The apparent final degree of fermentation may be controlled by adjusting, for example, the saccharifying conditions, whether or not the enzyme is used when saccharifying the raw material, the type and blending amount of the raw material, and the like. For example, if the saccharifying time is increased, the concentration of saccharide which can be used by yeast may be increased, and the apparent final degree of fermentation may be increased.

After completion of the fermentation, furthermore, the obtained wort fermented liquid is matured as a maturing process in a liquor storage tank, stored under a low temperature condition of about 0°C, and stabilized. Next, as a filtration step, yeast, proteins and the like are removed by filtering the wort fermented liquid after maturation to obtain a wort fermented liquid.

The obtained wort fermented liquid has a genuine extract component of 1.75 to 8.00% (w/w). If the content of the genuine extract component is less than 1.75% (w/w), the beer-like flavor of the obtained beer taste beverage can disappear and watery feeling can arise. On the other hand, if the content of the genuine extract component exceeds 8.00% (w/w), the beer-like sharpness of the obtained beer taste beverage can become weak. The content of the genuine extract component is preferably 2.50 to 5.50% (w/w), and more preferably 3.00 to 5.00% (w/w).

The genuine extract component content of the wort fermented liquid may be measured by, for example, the EBC method (BCOJ Beer Analysis Method, 7.2 (2004), edited by the Beer Brewery Association).

<Production of Aroma Composition>

The aroma composition used in the present invention can be produced, for example, by blending a predetermined amount of each aroma component. Further, in a preferred embodiment, the aroma composition can be produced by vaporizing aroma components from the wort fermented liquid and recovering these.

As a method of vaporizing the aroma components from the wort fermented liquid, for example, a method of adjusting the carbon dioxide gas pressure of the wort fermented liquid from 0.05 to 0.25 MPa and spraying the wort fermented liquid under reduced pressure is cited. By adjusting the carbon dioxide gas pressure before spraying the wort fermented liquid within the above range, the ratio of the content of each aroma component is optimized. The carbon dioxide gas pressure is preferably adjusted from 0.05 to 0.2 MPa, more preferably from 0.15 to 0.2 MPa.

The ambient pressure when spraying the wort fermented liquid is preferably 50 to 200 mbar, more preferably 70 to 150 mbar, and still more preferably 80 to 100 mbar. By adjusting the ambient pressure to the above range, the vaporization efficiency of the aroma components is improved. The wort fermented liquid can be sprayed, for example, in a tank whose internal pressure is adjusted to the above range.

The temperature of the wort fermented liquid at the time of spraying is 40 to 70°C, preferably 47 to 68°C, and more preferably 55 to 65°C By adjusting the temperature of the wort fermented liquid at the time of spraying to the above range, each aroma component can be efficiently vaporized.

Examples of the method of recovering the vaporized aroma component include a method of condensing the gas of the aroma component by cooling according to a conventional method. The condensed liquid is an aroma composition containing the specific aroma component in a specific amount.

<Production of low-alcohol beer-taste beverage>

The low-alcohol beer-taste beverage of the present invention can be produced by adding a predetermined amount of the aroma composition to the low-alcohol beer-taste beverage.

The low-alcohol beer-taste beverage with which the aroma composition is blended may be a fermented low-alcohol beer-taste beverage produced through the fermentation process or a non-fermented low-alcohol beer-taste beverage produced without undergoing the fermentation process.

From the viewpoint of enhancing the complex taste derived from brewing, in a preferred embodiment, the low-alcohol beer-taste beverage containing with which the aroma composition is blended is a fermented low-alcohol beer-taste beverage. From the viewpoint of optimizing the flavor balance, preferably, the low-alcohol beer-taste beverage with which an aroma composition is blended is a low-alcohol beer-taste beverage obtained by subjecting a wort-fermented liquid in which the aroma composition is volatilized to an alcohol-removing treatment, that is, an alcohol-removed wort fermented liquid.

The present invention will be described in more detail with reference to the following examples, but the present invention is not limited to these.

Exapmples

[Production of Wort Fermented Liquid]

Crushed malt, water, and corn starch were put in a preparation kettle, gelatinized at 70°C, and liquefied at 100°C. Next, crushed malt, an enzyme and warm water were put in a preparation tank, protein was decomposed at around 55°C, and then the liquid was transferred from the preparation kettle to the preparation tank, and saccharifying was performed at a temperature in the range of 60°C to 76°C. This saccharified liquid was filtered with a lauter that was a filter tank, then transferred to a boiling kettle, bitter hops were added, and boiled for 60 minutes. After boiling, warm water equivalent to the evaporated component was added, hot trub was removed in a whirlpool tank, followed by cooling to 10°C using a plate cooler to obtain cold wort. Bottom-fermenting beer yeast was added to this wort and fermented it at around 10°C for 7 days, after which the beer yeast was removed. The tank was changed, the resulting wort was matured for 7 days, then cooled to around -1°C and stabilized for 14 days. After dilution by adding gas-removed water, filtration was conducted using diatomaceous earth to obtain a wort fermented liquid (wort bottom fermented liquid).

[Measurement of linalool, citronellol, myrcene, geraniol, β-ionone and α-eudesmol concentration]

In the following examples and comparative examples, the concentrations of linalool, β-citronellol, myrcene, geraniol, β-ionone and α-eudesmol were measured by the following methods.

The concentration of each hop aroma component was measured using a stir bar sorptive extraction method (SBSE method: Stir Bar Sorptive Extraction). Particularly, β-damascone was added as an internal standard to a non-alcoholic beer-taste beverage that was the final product so as to reach 0.1 ppb. The sample was diluted 5-fold, and 20 ml of the diluted sample was collected in a 30-mL vial. A stir bar (length = 20 mm; Twister (trade name); manufactured by Gerstel GmbH, Germany) coated with 47 μl of PDMS (polydimethylsiloxane) was put into the vial, the lid was closed, followed by stirring at 40°C for 2 hours, so as to adsorb hop aroma components on the stir bar. The stir bar was taken out from the vial, and after completely removing water droplets, it was inserted into the GC-MS equipped with a thermal desorption unit (TDU); manufactured by Gerstel GmbH) and a programmable temperature-vaporization inlet (programmable temperature-vaporization inlet; CIS4; manufactured by Gerstel GmbH).

The GC-MS conditions are as follows.

• Gas chromatograph: 6890 manufactured by Agilent Technologies, Inc.
• Detector: MSD5973N quadrupole mass spectrum (manufactured by Agilent Technologies, Inc.)
• Column: DB-WAX capillary column (length: 60 m, inner diameter: 0.25 mm, film thickness: 0.25 $\mu$m, manufactured by Agilent Technologies, Inc.)
• Injection port: 250°C pulsed splitless injection mode
• Injection amount: 1 $\mu$L
• Carrier gas: helium (1 mL/min)
• Column temperature setting: 40°C (holding for 5 minutes)-(3°C/min) -240°C (20 minutes)
• Mass-to-charge ratio: 30 to 350 (m/z)
• Ionization conditions: 70 eV, single ion-monitoring mode (singleion-monitoring (SIM) mode)
• Quantification: The peak area of each aroma component was compared with the peak area of the internal standard substance. The analysis results obtained are shown in Table 1.

[Table 1]

Aroma components of wort fermented liquid

| Component name | Concentration (ppb) |
| --- | --- |
| Myrcene | 0.57 |
| $\beta$-Ionone | 0.0058 |
| Linalool | 71.33 |
| Citronellol | 8.63 |
| Geraniol | 1.40 |
| $\alpha$-Eudesmol | 1.10 |

[Production of low-alcohol beer-taste beverage containing aroma composition]

After adjusting the gas pressure of the wort fermented liquid (liquid temperature 0°C) obtained above to 0.20 MPa, the liquid temperature was adjusted from 55 to 65°C with a heat exchanger, and the resulting liquid was sprayed into a gas-removing tank under a reduced pressure of about 90 mbar to vaporize carbon dioxide gas and aroma components. The vaporized aroma components were condensed by cooling them to about 20°C to obtain an aroma composition.

The wort fermented liquid in which the aroma components were vaporized was heated to around 50°C using a plate cooler. Thereafter, it was brought into contact with water vapor heated to around 50°C in a column at a reduced pressure of around 90 mbar to adsorb volatile components to the water vapor so that alcohol and volatile components were removed. Thereafter, the aroma composition was returned to the alcohol-removed wort fermented liquid to produce a low-alcohol beer-taste beverage containing an aroma composition. The obtained low-alcohol beer-taste beverage containing the aroma composition was used as sample 1. The alcohol content of sample 1 was less than 1%. The analysis results of the aroma components are shown in Table 2.

[Table 2]

Aroma components of sample 1

| Component name | Concentration (ppb) |
| --- | --- |
| Myrcene | 0.19 |
| $\beta$-Ionone | 0.0019 |
| Linalool | 23.25 |
| Citronellol | 2.81 |
| Geraniol | 0.46 |
| $\alpha$-Eudesmol | 0.36 |

EP 4 285 736 A1

<Comparative Example 1>

[Production of low-alcohol beer-taste beverage containing aroma composition]

A low-alcohol beer-taste beverage containing an aroma composition was produced in the same manner as in the example except that the gas pressure of the wort fermented liquid (liquid temperature 0°C) before spraying it into the gas-removed tank was adjusted to 0.04 MPa. The obtained low-alcohol beer-taste beverage containing the aroma composition was used as sample 2. The alcohol content of sample 2 was less than 1%. The analysis results of the aroma components are shown in Table 3.

[Table 3]
Aroma components of sample 2

| Component name | Concentration (ppb) |
| --- | --- |
| Myrcene | 0.033 |
| β-Ionone | 0.00029 |
| Linalool | 3.80 |
| Citronellol | 0.51 |
| Geraniol | 0.043 |
| α-Eudesmol | 0.040 |

<Comparative Example 2>

[Production of low-alcohol beer-taste beverages containing no aroma composition]

A low-alcohol beer-taste beverage containing an aroma composition was produced in the same manner as in the example except that the gas pressure of the wort fermented liquid (liquid temperature 0°C) before spraying it into the gas-removed tank was adjusted to 0.04 MPa, and that the aroma composition was not returned to the alcohol-removed wort-fermented liquid. The obtained low-alcohol beer-taste beverage containing the aroma composition was used as sample 3. The alcohol content of sample 3 was less than 1%. The analysis results of the aroma components are shown in Table 4.

[Table 4]
Aroma components of sample 3

| Component name | Concentration (ppb) |
| --- | --- |
| Myrcene | 0 |
| β-Ionone | 0 |
| Linalool | 0 |
| Citronellol | 0 |
| Geraniol | 0 |
| α-Eudesmol | 0 |

<Reference Example>

[Changes of aroma component concentration and type]

By mixing samples 1 and 3 at different ratios, 1L low-alcohol beer-taste beverages having different concentrations of aroma components were produced and used respectively as samples 4 to 9.

<Sensory evaluation of non-alcoholic beer-taste beverages>

Non-alcoholic beer-taste beverages produced as described above were subjected to sensory evaluation. The evaluators were 6 trained panelists. The evaluation items were the intensity of fermented soybeans odor, the intensity of drool odor, the intensity of burnt odor, the intensity of potato odor, and the complex taste derived from brewing.

In the evaluation method, the temperature of the sample was adjusted to a liquid temperature of about 4°C, and the sensory intensity of the above items felt immediately after it was put into the mouth, namely, at the top was scored on a 5-levels scale. For the score, the score of sample 1 was given 3, given 4 if it was felt slightly strongly, 5 if it was felt strongly, 2 if it was felt slightly weakly, 1 if it was felt weakly, and finally the average of the scores of the 5 was calculated. The evaluation criteria for beer-like flavor are as follows.

Good "A": The average of the scores for the respective intensities of fermented soybeans odor, drool odor, burnt odor, and potato odor was 2.0 or less, and the average of the scores for the complex taste derived from brewing was 4.0 or more.

Acceptable "B": The average of the scores for the respective intensities of fermented soybeans odor, drool odor, burnt odor, and potato odor was more than 2.0 and 2.5 or less, and the average of the scores for the complex taste derived from brewing was 3.5 or more and less than 4.0.

Fail "C": The average of the scores for the respective intensities of fermented soybeans odor, drool odor, burnt odor, and potato odor exceeded 2.5, or the average of the scores for the complex taste derived from brewing was less than 3.5.

Table 5 shows the aroma component concentrations and evaluation results of Samples 4 to 9.

[Table 5]

| Evaluation of mixed sample | | | | | | | |
|---|---|---|---|---|---|---|---|
| | | Sample 4 | Sample 5 | Sample 6 | Sample 7 | Sample 8 | Sample 9 |
| Composition of beverage sample | Blending ratio of sample 1 (%) | 0 | 10 | 25 | 50 | 75 | 100 |
| | Blending ratio of sample 3 (%) | 100 | 90 | 75 | 50 | 25 | 0 |
| | Myrcene concentration (ppb) | 0 | 0.019 | 0.0475 | 0.095 | 0.1425 | 0.19 |
| | $\beta$-Ionone concentration (ppb) | 0 | 0.00019 | 0.000475 | 0.00095 | 0.001425 | 0.0019 |
| | Linalool concentration (ppb) | 0 | 2.325 | 5.8125 | 11.625 | 17.4375 | 23.25 |
| | Citronellol concentration (ppb) | 0 | 0.281 | 0.7025 | 1.405 | 2.1075 | 2.81 |
| | Geraniol concentration (ppb) | 0 | 0.046 | 0.115 | 0.23 | 0.345 | 0.46 |
| | $\alpha$-Eudesmol concentration (ppb) | 0 | 0.036 | 0.09 | 0.18 | 0.27 | 0.36 |
| Sensory evaluation | Intensity of fermented soybeans odor | 3.00 | 2.83 | 2.33 | 1.83 | 1.33 | 1.00 |
| | Intensity of drool odor | 3.00 | 2.83 | 2.67 | 2.17 | 1.83 | 1.00 |
| | Intensity of burnt odor | 3.00 | 3.00 | 2.17 | 2.00 | 2.00 | 1.00 |
| | Intensity of potato odor | 3.00 | 3.00 | 2.00 | 1.83 | 1.33 | 1.00 |
| | Complex taste derived from brewing | 3.00 | 3.33 | 3.50 | 4.17 | 4.67 | 5.00 |
| | Beer-like flavor | - | C | B | A | A | A |

From the sensory evaluation results in Table 5, at a minimum, in the aroma component concentrations of sample 6 (myrcene concentration 0.0475 ppb or more, $\beta$-ionone concentration 0.000475 ppb or more, linalool concentration 5.8125 ppb or more, citronellol concentration 0.7025 ppb or more, geraniol concentration 0.115 ppb or more, and $\alpha$-eudesmol concentration 0.09 ppb or more), it was shown that the unpleasant aromas (fermented soybeans odor, drool odor, burnt odor, and potato odor) were reduced. It was also shown that, by the aroma component concentrations of sample 6, it was shown that the complex taste derived from brewing was enhanced.

In addition, in order to investigate how each type of aroma component affect the flavor of low-alcohol beer-taste beverages, samples 10 to 33 were produced by changing the concentration of each of the aroma components of sample 7 one by one. The sensory evaluation results of samples 10 to 33 are shown in Tables 6 to 9.

Table 6]

|  |  | Sample 10 | Sample 11 | Sample 12 | Sample 13 | Sample 14 | Sample 15 |
|---|---|---|---|---|---|---|---|
| Composition of beverage sample | Blending ratio of sample 1 (% ) | 0 | 0 | 0 | 0 | 0 | 0 |
|  | Blending ratio of sample 3 (% ) | 100 | 100 | 100 | 100 | 100 | 100 |
|  | Myrcene concentration (ppb) | 0 | 0.050 | 0.500 | 1.000 | 0.095 | 0.095 |
|  | $\beta$-Ionone concentration (ppb) | 0.00095 | 0.00095 | 0.00095 | 0.00095 | 0 | 0.0005 |
|  | Linalool concentration (ppb) | 11.625 | 11.625 | 11.625 | 11.625 | 11.625 | 11.625 |
|  | Citronellol concentration (ppb) | 1.405 | 1.405 | 1.405 | 1.405 | 1.405 | 1.405 |
|  | Geraniol concentration (ppb) | 0.23 | 0.23 | 0.23 | 0.23 | 0.23 | 0.23 |
|  | $\alpha$-Eudesmol concentration (ppb) | 0.18 | 0.18 | 0.18 | 0.18 | 0.18 | 0.18 |
| Sensory evaluation | Intensity of fermented soybeans odor | 2.83 | 2.33 | 1.17 | 1.17 | 2.83 | 2.50 |
|  | Intensity of drool odor | 2.83 | 2.50 | 1.17 | 1.17 | 2.83 | 2.33 |
|  | Intensity of burnt odor | 3.00 | 2.50 | 1.17 | 1.00 | 3.00 | 2.33 |
|  | Intensity of potato odor | 3.00 | 2.50 | 1.17 | 1.00 | 3.00 | 2.33 |
|  | Complex taste derived from brewing | 3.33 | 3.67 | 5.00 | 4.83 | 3.50 | 4.00 |
|  | Beer-like flavor | C | B | A | A | C | B |

[Table 7]

| | | Sample 16 | Sample 17 | Sample 18 | Sample 19 | Sample 20 | Sample 21 |
|---|---|---|---|---|---|---|---|
| Composition of beverage sample | Blending ratio of sample 1 (%) | 0 | 0 | 0 | 0 | 0 | 0 |
| | Blending ratio of sample 3 (%) | 100 | 100 | 100 | 100 | 100 | 100 |
| | Myrcene concentration (ppb) | 0.095 | 0.095 | 0.095 | 0.095 | 0.095 | 0.095 |
| | $\beta$-Ionone concentration (ppb) | 0.001 | 0.01 | 0.00095 | 0.00095 | 0.00095 | 0.00095 |
| | Linalool concentration (ppb) | 11.625 | 11.625 | 0 | 8.0 | 20.0 | 30.0 |
| | Citronellol concentration (ppb) | 1.405 | 1.405 | 1.405 | 1.405 | 1.405 | 1.405 |
| | Geraniol concentration (ppb) | 0.23 | 0.23 | 0.23 | 0.23 | 0.23 | 0.23 |
| | $\alpha$-Eudesmol concentration (ppb) | 0.18 | 0.18 | 0.18 | 0.18 | 0.18 | 0.18 |
| Sensory evaluation | Intensity of fermented soybeans odor | 1.50 | 1.17 | 2.83 | 2.33 | 1.33 | 1.17 |
| | Intensity of drool odor | 1.67 | 1.17 | 2.83 | 2.50 | 1.67 | 1.17 |
| | Intensity of burnt odor | 1.83 | 1.00 | 3.00 | 2.17 | 1.33 | 1.00 |
| | Intensity of potato odor | 1.00 | 1.00 | 3.00 | 2.17 | 1.17 | 1.00 |
| | Complex taste derived from brewing | 5.00 | 4.83 | 3.00 | 4.17 | 5.00 | 4.83 |
| | Beer-like flavor | A | A | C | B | A | A |

[Table 8]

| | | Sample 22 | Sample 23 | Sample 24 | Sample 25 | Sample 26 | Sample 27 |
|---|---|---|---|---|---|---|---|
| Composition of beverage sample | Blending ratio of sample 1 (%) | 0 | 0 | 0 | 0 | 0 | 0 |
| | Blending ratio of sample 3 (%) | 100 | 100 | 100 | 100 | 100 | 100 |
| | Myrcene concentration (ppb) | 0.095 | 0.095 | 0.095 | 0.095 | 0.095 | 0.095 |
| | $\beta$-Ionone concentration (ppb) | 0.00095 | 0.00095 | 0.00095 | 0.00095 | 0.00095 | 0.00095 |
| | Linalool concentration (ppb) | 11.625 | 11.625 | 11.625 | 11.625 | 11.625 | 11.625 |
| | Citronellol concentration (ppb) | 0 | 0.5 | 5 | 10 | 1.405 | 1.405 |
| | Geraniol concentration (ppb) | 0.23 | 0.23 | 0.23 | 0.23 | 0 | 0.1 |
| | $\alpha$-Eudesmol concentration (ppb) | 0.18 | 0.18 | 0.18 | 0.18 | 0.18 | 0.18 |
| Sensory evaluation | Intensity of fermented soybeans odor | 2.67 | 2.33 | 1.67 | 1.17 | 2.50 | 2.33 |
| | Intensity of drool odor | 2.67 | 2.50 | 1.83 | 1.17 | 2.50 | 2.33 |
| | Intensity of burnt odor | 3.00 | 2.33 | 1.00 | 1.00 | 3.00 | 2.17 |
| | Intensity of potato odor | 3.00 | 2.33 | 1.00 | 1.00 | 3.00 | 2.17 |
| | Complex taste derived from brewing | 3.33 | 3.83 | 5.00 | 4.83 | 3.33 | 3.83 |
| | Beer-like flavor | C | B | A | A | C | B |

[Table 9]

| | | Sample 28 | Sample 29 | Sample 30 | Sample 31 | Sample 32 | Sample 33 |
|---|---|---|---|---|---|---|---|
| Composition of beverage sample | Blending ratio of sample 1 (%) | 0 | 0 | 0 | 0 | 0 | 0 |
| | Blending ratio of sample 3 (%) | 100 | 100 | 100 | 100 | 100 | 100 |
| | Myrcene concentration (ppb) | 0.095 | 0.095 | 0.095 | 0.095 | 0.095 | 0.095 |
| | β-Ionone concentration (ppb) | 0.00095 | 0.00095 | 0.00095 | 0.00095 | 0.00095 | 0.00095 |
| | Linalool concentration (ppb) | 11.625 | 11.625 | 11.625 | 11.625 | 11.625 | 11.625 |
| | Citronellol concentration (ppb) | 1.405 | 1.405 | 1.405 | 1.405 | 1.405 | 1.405 |
| | Geraniol concentration (ppb) | 0.5 | 1.0 | 0.23 | 0.23 | 0.23 | 0.23 |
| | α-Eudesmol concentration (ppb) | 0.18 | 0.18 | 0 | 0.1 | 0.5 | 1.0 |
| Sensory evaluation | Intensity of fermented soybeans odor | 1.50 | 1.17 | 2.50 | 2.50 | 1.50 | 1.17 |
| | Intensity of drool odor | 2.00 | 1.33 | 2.50 | 2.50 | 1.83 | 1.17 |
| | Intensity of burnt odor | 1.00 | 1.00 | 3.00 | 2.17 | 1.00 | 1.00 |
| | Intensity of potato odor | 1.00 | 1.00 | 3.00 | 2.17 | 1.00 | 1.00 |
| | Complex taste derived from brewing | 5.00 | 4.83 | 3.50 | 3.67 | 5.00 | 4.83 |
| | Beer-like flavor | A | A | C | B | A | A |

From the sensory evaluation results of samples 10 to 33, for myrcene, β-ionone, linalool, citronellol, geraniol and α-eudesmol, depending on their presence or absence and their increased concentrations, the unpleasant aromas of the non-alcoholic beer-taste beverages were reduced, and their complex taste derived from brewing increased, indicating that they were aroma components having a high flavor improving effect.

**Claims**

1. A non-alcoholic beer-taste beverage containing an aroma composition containing:

    0.0475 ppb or more of myrcene,
    0.000475 ppb or more of β-ionone,
    5.8125 ppb or more of linalool,
    0.7025 ppb or more of citronellol,
    0.115 ppb or more of geraniol, and
    0.09 ppb or more of α-eudesmall.

2. The non-alcoholic beer-taste beverage according to claim 1, wherein the aroma composition contains 0.0475 to 1.0 ppb of myrcene, 0.000475 to 0.010 ppb of β-ionone, 5.8125 to 71.33 ppb of linalool, 0.7025 to 10.0 ppb of citronellol, 0.115 to 1.4 ppb of geraniol, and 0.090 to 1.1 ppb of α-eudesmol.

3. The non-alcoholic beer-taste beverage according to claim 1 or 2, wherein aroma components of the aroma composition are derived from a wort fermented liquid.

4. The non-alcoholic beer-taste beverage according to any one of claims 1 to 3, wherein the wort fermented liquid is a wort bottom fermented liquid.

5. The non-alcoholic beer-taste beverage according to any one of claims 1 to 9, wherein the wort fermented liquid has a malt usage ratio of 50% or more.

6. The non-alcoholic beer-taste beverage according to any one of claims 1 to 5, containing an alcohol-removed wort fermented liquid.

7. A method for producing a non-alcoholic beer-taste beverage, comprising:

a step of adjusting the carbon dioxide gas pressure of a wort fermented liquid from 0.05 to 0.25 MPa;
a step of vaporizing carbon dioxide gas and aroma components from the wort fermented liquid by spraying the wort fermented liquid under reduced pressure;
a step of condensing the vaporized aroma components to obtain an aroma composition; and
a step of adding the obtained aroma composition to a non-alcoholic beer-taste beverage.

8. A method for enhancing a beer-like flavor and a complex taste derived from brewing of a non-alcoholic beer-taste beverage, comprising:

a step of adjusting the carbon dioxide gas pressure of a wort fermented liquid from 0.05 to 0.25 MPa;
a step of vaporizing carbon dioxide gas and aroma components from the wort fermented liquid by spraying the wort fermented liquid under reduced pressure; and
a step of condensing the vaporized aroma components to obtain an aroma composition;
a step of adding the obtained aroma composition to a non-alcoholic beer-taste beverage.

9. The method according to claim 7 or 8, wherein the non-alcoholic beer-taste beverage to which the aroma composition is added is obtained by subjecting the wort fermented liquid to an alcohol-removing treatment.

10. The method according to any one of claims 7 to 9, wherein the aroma composition contains 0.0475 ppb or more of myrcene, 0.000475 ppb or more of $\beta$-ionone, 5.8125 ppb or more of linalool, 0.7025 ppb or more of citronellol, 0.115 ppb or more of geraniol, and 0.09 ppb or more of $\alpha$-eudesmol.

11. The method according to any one of claims 7 to 9, wherein the aroma composition contains 0.0475 to 1.0 ppb of myrcene, 0.000475 to 0.010 ppb of $\beta$-ionone, 5.8125 to 71.33 ppb of linalool, 0.7025 to 10.0 ppb of citronellol, 0.115 to 1.4 ppb of geraniol, and 0.090 to 1.1 ppb of $\alpha$-eudesmol.

## INTERNATIONAL SEARCH REPORT

| International application No. |
|---|
| **PCT/JP2022/002159** |

### A. CLASSIFICATION OF SUBJECT MATTER

*A23L 2/00*(2006.01)i; *A23L 2/38*(2021.01)i; *A23L 2/56*(2006.01)i
FI:  A23L2/00 B; A23L2/38 J; A23L2/56

According to International Patent Classification (IPC) or to both national classification and IPC

### B. FIELDS SEARCHED

Minimum documentation searched (classification system followed by classification symbols)

A23L2/00; A23L2/38; A23L2/56

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2016/080282 A1 (ASAHI BREWERIES LTD) 26 May 2016 (2016-05-26) | 1-6 |
| | claims, paragraphs [0008], [0016], example 1, table 3 | |
| A | | 7-11 |
| Y | US 5384135 A (BRASSERIE DU CARDINAL FRIBOURG S.A.) 24 January 1995 (1995-01-24) | 7-9 |
| | claims, examples, column 3, lines 31-35, column 4, lines 20-22 | |
| A | | 10, 11 |
| Y | JP 2010-517559 A (UNIVERSIDADE DO PORTO) 27 May 2010 (2010-05-27) | 7-9 |
| | paragraphs [0033], [0034], [0063] | |
| A | | 10, 11 |
| Y | JP 2015-223120 A (GODO SHUSEI KK) 14 December 2015 (2015-12-14) | 7-9 |
| | paragraph [0028] | |
| A | | 10, 11 |
| A | JP 2020-96560 A (SAPPORO BREWERIES) 25 June 2020 (2020-06-25) | 1-11 |
| | claims, paragraphs [0024], [0068] | |

☐ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 March 2022** | **29 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/002159** |

**Box No. III    Observations where unity of invention is lacking (Continuation of item 3 of first sheet)**

This International Searching Authority found multiple inventions in this international application, as follows:

(Invention 1) Invention in claim 1 and dependent claims referring to claim 1

The invention in claim 1 and dependent claims referring to claim 1 have the special technical feature of a "non-alcohol beer-taste beverage including an aroma composition containing at least 0.0475 ppb of milcene, at least 0.000475 ppb of β-ionone, at least 5.8125 ppb of linalool, at least 0.7025 ppb of citronellol, at least 0.115 ppb of geraniol, and at least 0.09 ppb of α-eudesmol," and are thus classified as invention 1.

(Invention 2) Invention in claims 7 and 8, and dependent claims referring to claims 7 and 8

The invention in claims 7 and 8 and dependent claims referring to claims 7 and 8 share the common technical feature of a "non-alcohol beer-taste beverage" with claim 1 classified as invention 1. However, said technical feature does not make a contribution over the prior art in light of the disclosure of document 1 (paragraph [0008]: a beer-taste beverage includes a non-alcohol beer-taste beverage), and thus cannot be said to be a special technical feature. Furthermore, there are no other same or corresponding special technical features between these inventions.

Also, claims 7 and 8 are not dependent on claim 1. In addition, the inventions in claims 7 and 8 are not substantially identical to or similarly closely related to any of the claims classified as invention 1.

Thus, the invention in claims 7 and 8, and dependent claims referring to claims 7 and 8 cannot be classified as invention 1.

In addition, the invention in claims 7 and 8 have the special technical feature of a "method ... comprising: a step for adjusting a carbon dioxide gas pressure of a wort fermented solution to 0.05-0.25 MPa; a step for vaporizing a carbon dioxide gas and an aroma component from the wort fermented solution by spraying the wort fermented solution under reduced pressure; a step for condensating the vaporized aroma component to obtain an aroma composition; a step for adding the obtained aroma composition to a non-alcoholic beer-taste beverage," and are thus classified as invention 2.

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**    ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

**INTERNATIONAL SEARCH REPORT**
Information on patent family members

| | International application No. |
|---|---|
| | **PCT/JP2022/002159** |

| Patent document cited in search report | Publication date (day/month/year) | Patent family member(s) | Publication date (day/month/year) |
|---|---|---|---|
| WO 2016/080282 A1 | 26 May 2016 | US 2017/0339983 A1 claims, paragraphs [0064], [0079]-[0081], example 1, table 5 EP 3222705 A1 | |
| US 5384135 A | 24 January 1995 | EP 560712 A1 | |
| JP 2010-517559 A | 27 May 2010 | US 2010/0047422 A1 paragraphs [0032], [0033], [0068] EP 2109372 A2 | |
| JP 2015-223120 A | 14 December 2015 | (Family: none) | |
| JP 2020-96560 A | 25 June 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021012326 A
- JP 2010517559 A

- JP 2018183126 A

**Non-patent literature cited in the description**

- BCOJ Beer Analysis Method. Beer Brewery Association, 2004, vol. 7, 2